# EUROPEAN PATENT SPECIFICATION

(11) **EP 2 534 945 B1**
(45) Date of publication and mention of the grant of the patent: **19.03.2014**
(21) Application number: 11170223.9
(22) Date of filing: 16.06.2011
(51) Int. Cl.: A01K 11/00

(54) **Flexible electronic ear tag**
Flexible elektronische Ohrmarke
Étiquette d'oreille électronique souple

(43) Date of publication of application: 19.12.2012
(73) Proprietor: Datamars SA, 6930 Bedano-Lugano (CH)
(72) Inventor: Quarry, Antony, CH-6987 Caslano (CH); Vilaseca Vintro, Joan Francesc, Canillo (AD); Pachoud, Damien, CH-6963 Pregassona (CH)
(74) Representative: Harmann, Bernd-Günther

(56) References cited:
- EP-A2- 0 870 429
- WO-A1-95/04455
- WO-A1-2004/017723
- US-A1- 2008 236 001

## Description

The present invention relates to ear tags attachable to animals for identifying reasons.

For decades it has been well-established routine to identify an animal by means of an ear tag carrying a visible code, usually consisting of numbers, letters or a combination thereof. More recently, the use of electronic transponders, which allow automated identification, has become common practice for the identification of domestic livestock, such as beef or dairy cattle, sheep or pigs. Electronic transponders contain a microcircuit that is designed to emit a characteristic electromagnetic signal when stimulated by a suitable signal from a nearby antenna. The antenna can be stationary as well as integrated into portable readers. When the transponder is worn by an animal, the transponder signal can be used for identifying this animal. A common way to attach transponder modules to an animal is to incorporate them into ear tags or other identifier devices attached on the outside of the animal.

Typically, ear tags comprise a first (male) and a second (female) part that can be opposed on both sides of an animal's ear. Usually, a piercing male part with a barbed tip is pushed through the animal's ear into a female part, in which the barbed tip then is irretrievably trapped, so that the tag subsequently cannot be removed without destroying the tag or injuring the animal. According to its design, the tag can either be applied manually or semiautomatically, e.g. with a special pair of pliers.

An electronic animal identification ear tag with a metal ear clip is i.e. disclosed in document US 2008/0236001 A1. The identification ear tag comprises a self powered transponder which is encased in a plastic housing. The housing is affixed to a one piece metal ear clip. The ear clip has self clinching provisions that are metal only, and the housing has a bubble opening therein to accommodate the closure of the self clinching means. The self clinching locking means and, in a first embodiment, a retaining tooth formed on a leg of said metal ear clip maintain the position of the sleeve on said metal ear clip. In the first embodiment, the housing is a sleeve sliding onto the metal ear clip, while a second embodiment has the housing formed and molded around the metal ear clip.

Though the male and female parts may be provided as separate components, more preferably they are situated at opposite ends of a single tag body. When folded around the edge of the animal's ear in an arc, unauthorised removal of the device becomes even more difficult. Different solutions for ear tags with a one-part tag body are described in WO 95/04455. Due to complex design, production costs for these solutions are relatively high.

The importance of fraud protection is an increasing factor for the design of ear tags. The identifying transponder means have to be incorporated into the tag in such a way that removal or replacement of these means is prevented or at least made more difficult. A common way of removal protection is to pot the transponder means into the body of the tag during the production of the tag. A disadvantage of this solution is a lack in flexibility for the customer.

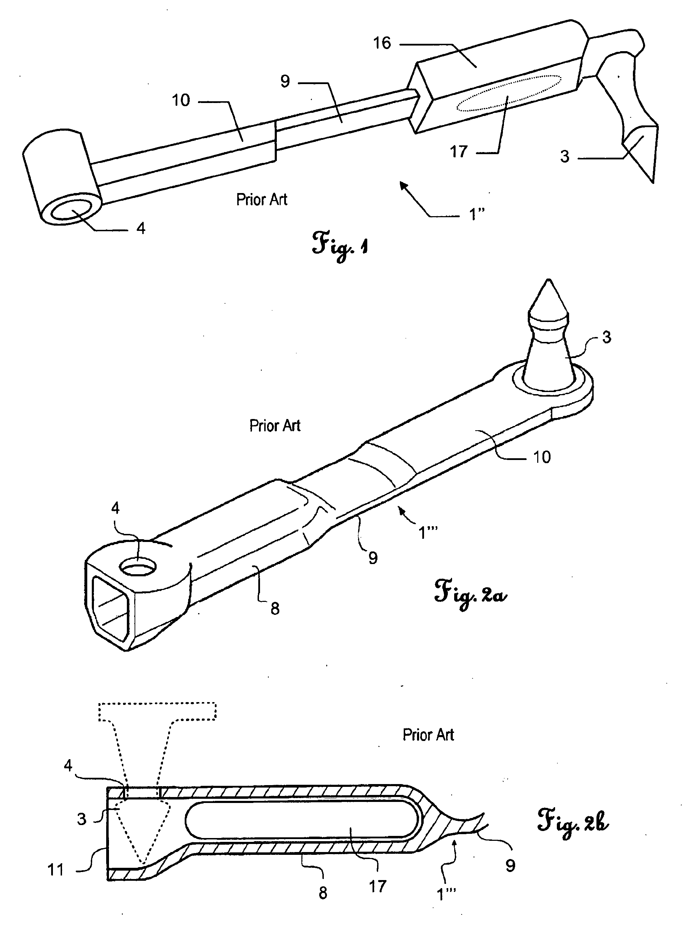

Figure 1 shows a representation of a prior art flexible electronic ear tag 1'' with a barbed spike 3 as a male end and an opening 4 as a female end. It comprises a link portion 10 with a flexible region 9 and is foldable, so that the barbed spike 3 and the opening 4 can be engaged. A transponder portion 16 encases transponder means 17. The transponder means 17 have either been potted into the tag 1'' during the production or have been plugged into a cavity of the tag 1" subsequently. As in the latter case the transponder means 17 are freely accessible, it is quite easy to manipulate them.

A more variable solution is described in WO 2004/017723 Al, where the transponder means and the tag are brought together just before the attachment of the tag on an animal. A representation of this tag is shown in Figures 2a and 2b. This document discloses an electronic ear tag 1''' for animal identification, being a one-piece plastics moulding with a female end having an opening 4 and a male end having a barbed spike 3, connected by a flexible link 10. It is designed to secure through an animal's ear, while presenting an exterior printable surface to carry a visual identification code. Towards the female end the link 10 includes a capsule cavity 8 to hold a transponder module 17. The insertion opening 11 of the capsule cavity 8 faces lengthwise of the link onto the axis of the opening 4 at the female end, so that when the tag is locked in position the male spike 3 blocks the cavity 8, and the transponder module cannot get out.

One disadvantage of this solution is that it is possible to access the male spike 3 and to push it down with a tool to easily disengage it from the opening 4 without any evidence. This solution therefore is not tamperproof.

Another disadvantage of this solution is the generation of an open cavity, into which dirt, grease and humidity could ingress, this way possibly forming a habitat for germs and other causative organisms. These could harm the health of the animal. Also, the transponder means could be damaged.

It is an object of the present invention to provide a flexible electronic ear tag with an improved transponder fixation for superior fraud protection.

Another object of the invention is to provide a flexible electronic ear tag at low cost and for easy handling.

Moreover, it is a particular object of the invention to provide a flexible electronic ear tag with enhanced dirt protection in order to prevent the development of germs.

At least one of these objects is achieved by the flexible electronic ear tag according to Claim 1, the method according to Claim 11 and/or the dependent claims of the present invention.

A flexible electronic tag according to the invention includes a tag body and a capsule. The capsule is designed to hold transponder means, particularly an RFID coil and/or chip, and can be inserted into a hollow portion of the tag body.

In a preferred embodiment the tag body has a lock formed by a male part and a female part, which are connected by a link portion and can be arranged at opposite sides of i.e. an animal's ear and can be engaged by a piercing action. By engagement of male and female part the capsule is blocked within the hollow portion of the tag body. In order to allow uniform bending of the tag around the edge of an animal's ear, in the middle of the tag body there is a flexible section within the link portion. The male and female parts are designed and positioned in such a way that, when the tag body is folded by piercing i.e. an animal's ear, they are brought into opposition and the male part engages with the female part. On one side the female part is covered by a hollow portion with an insertion aperture, into which the capsule is to be inserted. This hollow portion is located on that side of the tag body that is opposite to the side of the engagement of male and female part.

The flexible section preferably is or comprises a ribbed section, which allows an improved uniform bending.

The capsule has a coupling portion at one end, which is brought in line with the female part of the tag body, when the capsule is fully inserted into the hollow part. Thus, when the male part engages with the female part, it also engages with the coupling portion of the capsule, so that as long as the male part engages with the female part the capsule is locked inside the hollow portion and cannot be removed without leaving evidence of tampering, e.g. breaking the tag at a predetermined force. To be not removable in the following is to be understood as to be not removable without leaving evidence of tampering.

Preferably, the backside of the capsule tightly seals the insertion aperture of the hollow portion, in order to prohibit the ingression of dirt or humidity.

In a preferred embodiment of the invention the female part of the tag body is a simple opening and the male part is a barbed spike that can be inserted into this opening but not be removed from it without leaving evidence of tampering. The coupling portion of the capsule then would be an opening, too, which the barbed spike can engage with when the capsule is in its place.

Alternatively, the opening in the tag body is large enough to let the barbed spike be removed, and the coupling portion has the function to entrap the barbed spike in a way that it cannot be removed any more. This would prevent accidental spoiling of the tag body by unintentional permanent engaging of the two ends of the tag body with no capsule being positioned in the hollow portion.

In a preferred embodiment of the invention the barbed spike is designed in such a way that after engaging with the opening and the coupling portion it closely seals the opening, e.g. with a plastic disc, a rubber plug or a suction pad, this way prohibiting the ingression of dirt or humidity. Alternatively (or additionally), the barbed spike and the coupling portion are designed in such a way that after engaging with each other they precisely fit in such a way that there is no hollow space generated between the two of them.

In an alternative embodiment of the invention an additional air hole is provided at the coupling portion to allow air circulation in order to remove humidity out of the hollow space.

In a preferred embodiment of the invention the flexible electronic tag is made of durable plastic. In order to reduce production costs, the two parts of the tag, the tag body and the capsule, each can be produced as a single component, for instance by injection moulding. The material of the tag body preferably should be laser-printable and resistant to ultraviolet radiation, in order to be suitable to carry a visual code. Appropriate materials are for instance polyurethane or nylon. Visual codes e.g. can be applied on the flat link portion and the hollow portion. Of course it is also possible to use the tag as a visual only tag without any transponder means.

In a preferred embodiment of the invention the transponder means is potted in a resin material or an encapsulation compound before it is placed in the capsule. The material e.g. can be based on epoxy, urethane or silicone. Potting is an effective way to protect the transponder means from environmental influences, such as humidity, heat, grease, dust, impacts or vibrations. Potting materials that are suitable for this purpose are for instance sold under the brand names Araldite^{®} or Aradur^{®}.

Preferably, the capsule can already be produced with integrated transponder means. It is also possible to insert the transponder means into the capsule and to fill-up and seal the cavity on-site. In case the transponder means are robust enough, particularly to shock and vibrations, filling-up or sealing the cavity is not necessary at all, as the capsule can be designed in a way that, when placed in the hollow portion of the tag body, it reliable blocks environmental impacts from the cavity holding the transponder means.

In a preferred embodiment the capsule and the tag body have a system to hold the capsule in place after it has been inserted into the hollow portion. This is to block the capsule from falling out of the hollow portion before or during the attaching of the tag to an animal. The system can e.g. be a click assembly system with a male and a female part, the male part being on the surface of the capsule and the female part on a corresponding spot inside the hollow portion - or the other way around -, so that the two parts engage when the capsule is fully inserted into the hollow portion. Male and female part can be provided as a spring element engaging with a recess or a pin engaging with an according hole. Those elements can be one-piece with the capsule and the hollow portion, respectively.

The invention in the following will be described in detail by referring to exemplary embodiments that are accompanied by figures, in which:
- Fig. 1: shows a schematic representation of a prior art ear tag with a transponder portion;
- Fig. 2a: shows a schematic representation of a prior art ear tag body with a hollow portion for a transponder means;
- Fig. 2b: shows the hollow portion of the prior art ear tag body of Fig. 2a in a sectional view with an inserted transponder capsule;
- Fig. 3a: shows a schematic representation of an ear tag body as a part of a first embodiment of the ear tag according to the invention;
- Fig. 3b: shows the ear tag body of Fig. 3a in front view;
- Fig. 3c: shows the ear tag body of Fig. 3a in side view;
- Fig. 4: shows a schematic representation of an ear tag body as a part of a second embodiment of the ear tag according to the invention;
- Fig. 5a: shows a schematic representation of a capsule for transponder means as a part of the ear tag according to the invention;
- Fig. 5b: shows the capsule of Fig. 5a in top view;
- Fig. 5c: shows the capsule of Fig. 5a in side view;
- Fig. 6: shows the capsule of Fig. 5a with inserted potted transponder means;
- Fig. 7: shows a sectional drawing of the first embodiment of the ear tag according to the invention with the tag body and an inserted capsule with transponder means;
- Fig. 8: shows schematically the single steps of assembling the single components of the ear tag;
- Fig. 9a: shows a schematic representation of the first embodiment of an ear tag according to the invention with an inserted capsule;
- Fig. 9b: shows the ear tag of Fig. 9a, the body of which being folded and secured according to the invention.

The Figures 1, 2a and 2b are representations of different prior art flexible electronic ear tags.

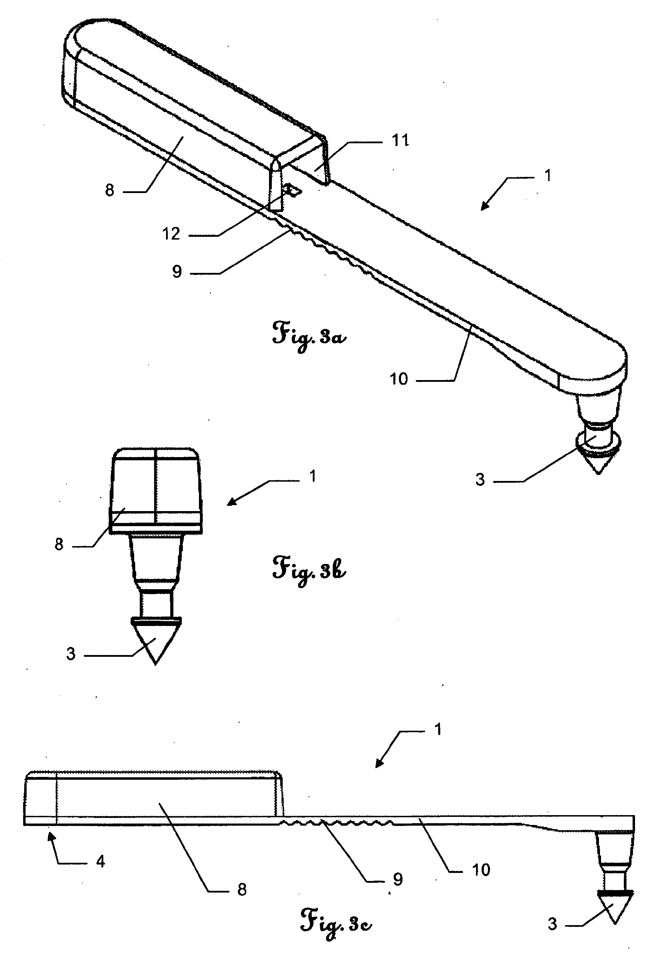

The Figures 3a, 3b and 3c show a first embodiment of the tag body 1 of a flexible electronic ear tag according to the present invention. In this embodiment, the tag body 1 is produced as a one-piece moulded plastic entity. It has a male end, formed as a barbed spike 3, and a female end, formed as an opening 4. Both ends are connected by a flat link portion 10 that has a flexible region 9 equidistant from the barbed spike 3 and the opening 4.

A hollow portion 8 covers the opening 4 from one side and has an insertion aperture 11 facing away from the opening 4 and towards the male end of the tag body 1 with the barbed spike 3. Inside the hollow portion 8 a click assembly system female part 12 is integrated into the tag body 1.

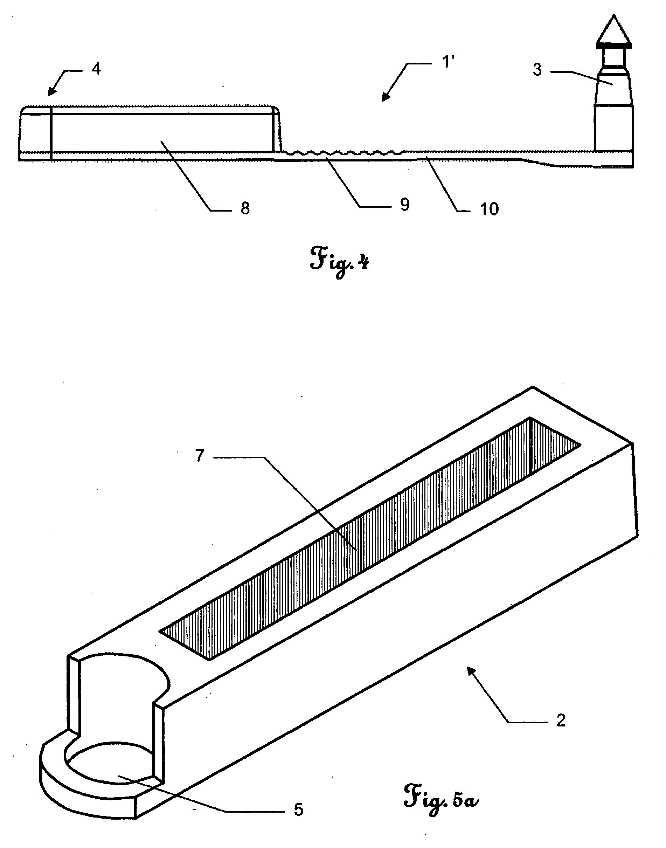

In this embodiment the hollow part 8 and the barbed spike 3 are arranged on opposed sides of the surface of the tag body 1: the hollow part 8 on the outer side and the barbed spike 3 on the inner side, when the tag body is folded. As shown in Figure 4, in a second embodiment it is also conceivable that the barbed spike 3 and the hollow portion 8 are placed on the same surface of the tag body 1' , and the opening 4 is on top of the hollow portion 8.

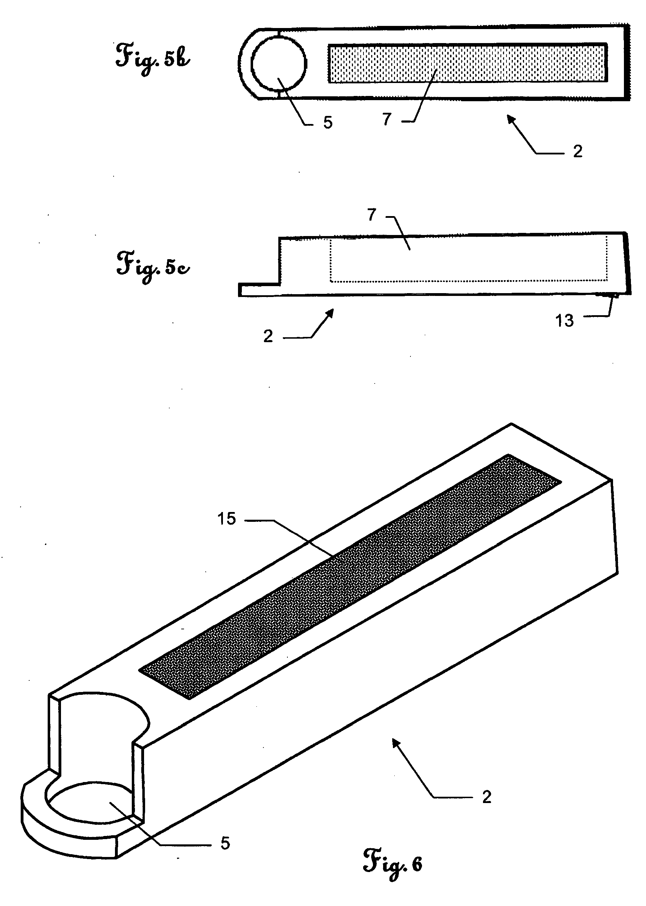

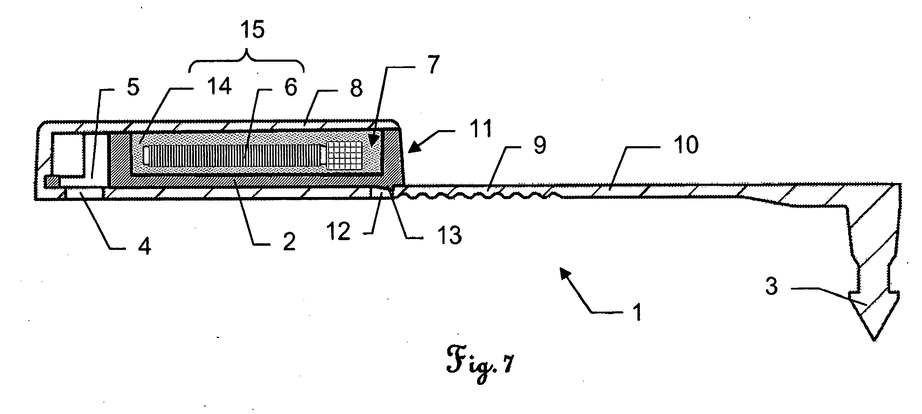

The figures 5a, 5b and 5c are illustrations of the capsule 2 of a flexible electronic ear tag according to the invention. The capsule 2 is shaped in a way that it fits into the hollow portion 8 of the tag body 1 and can be inserted through the insertion aperture 11. The capsule 2 has a cavity 7, designed to hold transponder means 6. In a special embodiment the cavity 7 holds transponder means 6 and is filled with resin material 14, respectively holds potted transponder means 15. The capsule 2 comprises a coupling portion 5, designed to engage with the male end of the tag body 1, and a male part of a click assembly system 13. The coupling portion 5 is designed to be in line with the opening 4 of the tag body 1 when the capsule 2 is fully inserted into the hollow portion 8 (see Fig. 7). The male part of the click assembly system 13 is designed to engage with a female part of the click assembly system 12 when the capsule 2 is fully inserted into the hollow portion 8. The click assembly system prevents that the capsule 2 can fall out of the hollow portion 8 before or during the attachment of the tag 1 to an animal's ear.

Figure 6 shows the capsule 2, the cavity 7 of which holds potted transponder means 15.

Figure 7 shows all components of the first embodiment of the flexible electronic ear tag according to the invention in a sectional drawing. The capsule 2, its cavity 7 holding the transponder means 6 and being filled with resin material 14 (respectively holding potted transponder means 15), has been inserted into the hollow portion 8 of the tag body 1. In this sectional drawing the positioning of the coupling portion 5 of the capsule 2 aligned with the opening 4 of the tag body 1 can clearly be seen. Also the click assembly system is shown: the male part 13, which is a part of the capsule 2, has engaged with the female part 12, which is a part of the tag body 1. This stops the capsule 2 from falling out of the hollow portion 8. Of course the female part 12 can also be arranged at the capsule 2 and the male part 13 at the tag body 1, and the position where the parts are located at the capsule 2 and the tag body 1 can vary. The rear side of the capsule 2 seals the insertion opening 11 of the hollow portion 8.

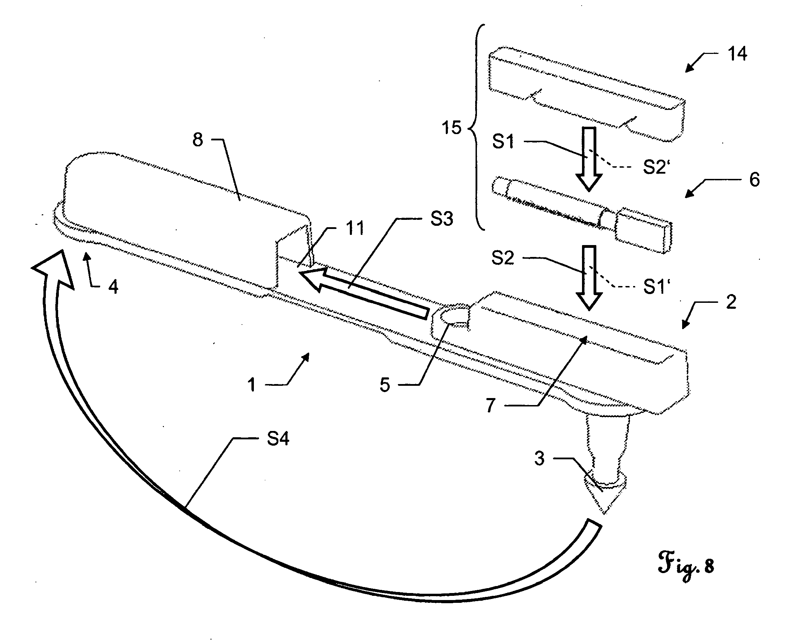

Figure 8 illustrates the single steps of assembling the single components of a flexible electronic ear tag according to the invention and the step of fixation. In a first step S1 a transponder means 6 is potted with liquid resin 14 or comparable sealing means. In a second step S2 the potted transponder means 15 is inserted into the cavity 7 of the capsule 2. Alternatively, in a first step S1' the transponder means 6 are inserted into the cavity 7 without being potted, and in a second step S2' the cavity then is filled with liquid resin 14 or comparable filler means.

In a third step S3 the capsule 2 with the inserted transponder means 6, 15 is inserted into the hollow portion 8 of the tag body 1. Thus, the male part 13 and the female part 12 of the click assembly system engage and the coupling portion 5 is brought in line with the opening 4. In a fourth step S4 the tag body 1 is folded, particularly around an animal's ear, and the barbed spike 3, particularly after being pushed through the animal's ear, engages with the opening 4 and the coupling portion 5.

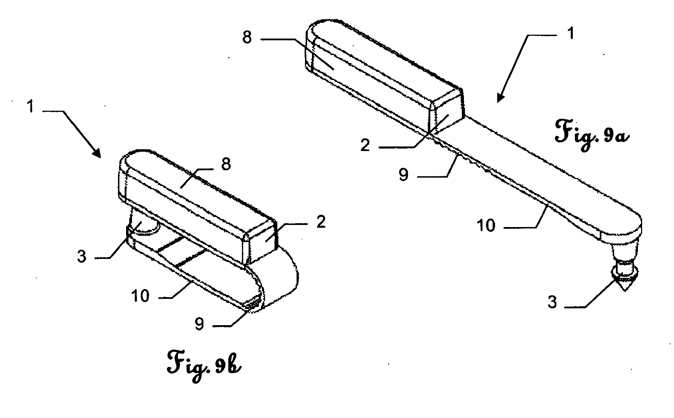

Figures 9a and 9b show the flexible electronic ear tag according to the invention with the capsule 2 inserted into the hollow part 8 of the tag body 1. In Figure 9b the link portion 10 has been folded at the flexible region 9 and the barbed spike 3 has engaged with the opening 4 and the coupling portion 5.

Although the invention is illustrated above, partly with reference to some preferred embodiments, it must be understood that numerous modifications and combinations of different features of the embodiments can be made. All of these modifications lie within the scope of the appended claims.

## Claims

1. Ear tag comprising a tag body (1, 1') and a capsule (2), the tag body (1, 1')
• having a male part (3) and a female part (4) connected by a link portion (10) with a flexible region (9), and
• having a hollow portion (8) with an insertion aperture (11), designed to accommodate the capsule (2) and covering the female part (4), and
• being designed in such a way that by folding the link portion (10) the male part (3) and the female part (4) can be brought into opposition and be engaged,
**characterised in that**
• the insertion aperture (11) faces away from the female part (4);
• the capsule (2) is designed to hold transponder means (6) and has a coupling portion (5); and
• the coupling portion (5) is arranged in line with the female part (4) when the capsule (2) is fully inserted into the hollow portion (8).

2. Ear tag according to Claim 1,
**characterised in that**
the capsule (2) has
• a front side comprising the coupling portion (5), and is designed to be inserted into the insertion aperture (11) with the front side first; and'
• a rear side, designed to seal the insertion aperture (11) when the capsule (2) is fully inserted.

3. Ear tag according to any of Claim 1 or Claim 2,
**characterised in that**
the male part (3) is a barbed spike and the female part (4) is an opening.

4. Ear tag according to any of the preceding claims,
**characterised in that**
the male part (3) and the female part (4) are designed in such a way that after having engaged the male part (3) cannot be removed from the female part (4).

5. Ear tag according to any of the preceding claims,
**characterised in that**
the male part (3) and the coupling portion (5) are designed in such a way that after having engaged the male part (3) cannot be removed from the coupling portion (5).

6. Ear tag according to any of the preceding claims,
**characterised by**
a click assembly system with a male part (13) and a female part (12), of which one is situated inside the hollow portion (8) of the tag body (1, 1') and the other is situated on the capsule (2), the click assembly system being designed in such a way that when the capsule (2) is fully inserted into the hollow portion (8) the male part (12) and the female part (13) engage with each other in order to hold the capsule (2) in place.

7. Ear tag according to any of the preceding claims,
**characterised in that**
the capsule (2) has a cavity (7) that is designed to accommodate
• transponder means (6), in particular an RFID coil and/or chip, and/or
• potted transponder means (15), comprising transponder means (6), which are potted with a resin material (14), particularly based on epoxy, urethane or silicone.

8. Ear tag according to any of the preceding claims,
**characterised in that**
the capsule (2) holds transponder means (6), particularly potted transponder means (15).

9. Ear tag according to any of the preceding claims,
**characterised in that**
the tag body (1, 1') and/or the capsule (2) are made of plastics, particularly based on polyurethane or nylon, and/or are one-piece moulded entities.

10. Ear tag according to any of the preceding claims,
**characterised in that**
the link portion (10) is designed to be folded at the flexible region (9), the flexible region (9) particularly being a ribbed section.

11. Method to securely lock a capsule (2), which is designed for holding transponder means (6), in the tag body (1, 1') of an ear tag according to any of the Claims 1 to 10,
**characterised by**
• plugging (S3) the capsule (2) into a hollow portion (8) of the tag body (1, 1');
• engaging (S4) a male part (3) of the tag body (1, 1') with a female part (4) of the tag body (1, 1')and with a coupling portion (5) of the capsule (2).

12. Method according to Claim 11,
**characterized in that**
before plugging (S3) the capsule (2) into the hollow portion (8) one of the following step sequences is executed:
• potting (S1) transponder means (6) with a resin material (14), and inserting (S2) potted transponder means (15) into a cavity (7) of the capsule (2); or
• inserting (S1') transponder means (6) into a cavity (7) of the capsule (2) and filling (S2') the cavity (7) with a resin material (14).

## Patentansprüche

1. Ohrmarke, umfassend einen Markenkörper (1, 1') und eine Kapsel (2), wobei der Markenkörper (1, 1')
• einen männlichen Teil (3) und einen weiblichen Teil (4) aufweist, die durch einen Verbindungsabschnitt (10) mit einem flexiblen Bereich (9) miteinander verbunden sind, und
• einen hohlen Abschnitt (8) mit einer Einfügeöffnung (11) aufweist, die dafür ausgelegt ist, die Kapsel (2) aufzunehmen und den weiblichen Teil (4) zu bedecken, und
• derart ausgebildet ist, dass durch das Falten des Verbindungsabschnitts (10) der männliche Teil (3) und der weibliche Teil (4) in eine einander gegenüberliegende Position und miteinander in Eingriff gebracht werden können,
**dadurch gekennzeichnet, dass**
• die Einfügeöffnung (11) vom weiblichen Teil (4) abgewandt ist;
• die Kapsel (2) dafür ausgelegt ist, Transponder-Mittel (6) zu halten, und einen Kopplungsabschnitt (5) umfasst; und
• der Kopplungsabschnitt (5) auf einer Linie mit dem weiblichen Teil (4) angeordnet ist, wenn die Kapsel (2) vollständig in den hohlen Abschnitt (8) eingefügt ist.

2. Ohrmarke nach Anspruch 1,
**dadurch gekennzeichnet, dass**
die Kapsel (2) Folgendes umfasst:
• eine Vorderseite, die den Kopplungsabschnitt (5) umfasst und dafür ausgelegt ist, mit der Vorderseite zuerst in die Einfügeöffnung (11) eingefügt zu werden; und
• eine Rückseite, die dafür ausgelegt ist, die Einfügeöffnung (11) abzudichten, wenn die Kapsel (2) vollständig eingefügt ist.

3. Ohrmarke nach Anspruch 1 oder Anspruch 2,
**dadurch gekennzeichnet, dass**
der männliche Teil (3) ein mit Fortsätzen versehener Dorn ist und der weibliche Teil (4) eine Öffnung ist.

4. Ohrmarke nach einem der vorhergehenden Ansprüche,
**dadurch gekennzeichnet, dass**
der männliche Teil (3) und der weibliche Teil (4) derart ausgebildet sind, dass der männliche Teil (3) nach dem Einfügen nicht mehr aus dem weiblichen Teil (4) entfernt werden kann.

5. Ohrmarke nach einem der vorhergehenden Ansprüche,
**dadurch gekennzeichnet, dass**
der männliche Teil (3) und der Kopplungsabschnitt (5) derart ausgebildet sind, dass der männliche Teil (3) nach dem Einfügen nicht mehr aus dem Kopplungsabschnitt (5) entfernt werden kann.

6. Ohrmarke nach einem der vorhergehenden Ansprüche,
**gekennzeichnet durch**
ein Schnappverbindungssystem mit einem männlichen Teil (13) und einem weiblichen Teil (12), von denen einer in dem hohlen Abschnitt (8) des Markenkörpers (1, 1') angeordnet ist und der andere auf der Kapsel (2) angeordnet ist, wobei das Schnappverbindungssystem derart ausgebildet ist, dass, wenn die Kapsel (2) vollständig in den hohlen Abschnitt (8) eingefügt ist, der männliche Teil (12) und der weibliche Teil (13) miteinander in Eingriff gelangen, um die Kapsel (2) an ihrem Platz zu halten.

7. Ohrmarke nach einem der vorhergehenden Ansprüche,
**dadurch gekennzeichnet, dass**
die Kapsel (2) einen Hohlraum (7) aufweist, der dafür ausgelegt ist, Folgendes aufzunehmen:
• Transponder-Mittel (6), insbesondere eine RFID-Spule und/oder einen Chip, und/oder
• vergossene Transponder-Mittel (15), umfassend Transponder-Mittel (6), die mit einem Harzmaterial (14), insbesondere auf Epoxid-, Urethan- oder Silikonbasis, vergossen sind.

8. Ohrmarke nach einem der vorhergehenden Ansprüche,
**dadurch gekennzeichnet, dass**
die Kapsel (2) Transponder-Mittel (6), insbesondere vergossene Transponder-Mittel (15), hält.

9. Ohrmarke nach einem der vorhergehenden Ansprüche,
**dadurch gekennzeichnet, dass**
der Markenkörper (1, 1') und/oder die Kapsel (2) aus Kunststoff, insbesondere auf Polyurethan- oder Nylonbasis, hergestellt sind und/oder einstückig geformte Einheiten sind.

10. Ohrmarke nach einem der vorhergehenden Ansprüche,
**dadurch gekennzeichnet, dass**
der Verbindungsabschnitt (10) dafür ausgelegt ist, beim flexiblen Bereich (9) gefaltet zu werden, wobei der flexible Bereich (9) insbesondere ein gerippter Abschnitt ist.

11. Verfahren zur sicheren Verriegelung einer Kapsel (2), die zum Halten von Transponder-Mitteln (6) bestimmt ist, in dem Markenkörper (1, 1') einer Ohrmarke nach einem der Ansprüche 1 bis 10,
**gekennzeichnet durch**
• das Einfügen (S3) der Kapsel (2) in einen hohlen Abschnitt (8) des Markenkörpers (1, 1');
• das Bringen (S4) eines männlichen Teils (3) des Markenkörpers (1, 1') in Eingriff mit einem weiblichen Teil (4) des Markenkörpers (1, 1') und mit einem Kopplungsabschnitt (5) der Kapsel (2).

12. Verfahren nach Anspruch 11,
**dadurch gekennzeichnet, dass**
vor dem Einfügen (S3) der Kapsel (2) in den hohlen Abschnitt (8) eine der folgenden Schrittabfolgen ausgeführt wird:
• Vergießen (S1) der Transponder-Mittel (6) mit einem Harzmaterial (14), und Einfügen (S2) der vergossenen Transponder-Mittel (15) in einen Hohlraum (7) der Kapsel (2); oder
• Einfügen (S1') der Transponder-Mittel (6) in einen Hohlraum (7) der Kapsel (2) und Füllen (S2') des Hohlraums (7) mit einem Harzmaterial (14).

## Revendications

1. Etiquette d'oreille comprenant un corps d'étiquette (1, 1') et une capsule (2), le corps d'étiquette (1, 1')
• ayant une partie mâle (3) et une partie femelle (4) reliées par une portion de liaison (10) avec une région flexible (9) et
• ayant une portion creuse (8) avec une ouverture d'insertion (11) conçue pour loger la capsule (2) et couvrant la partie femelle (4) et
• étant conçu de telle manière qu'en pliant la portion de liaison (10) la partie mâle (3) et la partie femelle (4) peuvent être amenées en opposition et à être en prise,
**caractérisée en ce que**
• l'ouverture d'insertion (11) est détournée de la partie femelle (4) ;
• la capsule (2) est conçue pour maintenir un moyen de transpondeur (6) et a une portion de couplage (5) et
• la portion de couplage (5) est arrangée alignée avec la partie femelle (4) lorsque la capsule (2) est entièrement insérée dans la portion creuse (8).

2. Etiquette d'oreille selon la revendication 1,
**caractérisée en ce que**
la capsule (2) a
• un côté frontal comprenant la portion de couplage (5) et est conçue pour être insérée dans l'ouverture d'insertion (11) avec le côté frontal en premier et
• un côté arrière conçu pour fermer l'ouverture d'insertion (11) lorsque la capsule (2) est entièrement insérée.

3. Etiquette d'oreille selon l'une quelconque des revendications 1 ou 2,
**caractérisée en ce que**
la partie femelle (3) est une pointe barbelée et la partie femelle (4) est une ouverture.

4. Etiquette d'oreille selon l'une quelconque des revendications précédentes,
**caractérisée en ce que**
la partie mâle (3) et la partie femelle (4) sont conçues de telle manière qu'après avoir été mise en prise la partie mâle (3) ne peut être enlevée de la partie femelle (4).

5. Etiquette d'oreille selon l'une quelconque des revendications précédentes,
**caractérisée en ce que**
la partie mâle (3) et la portion de couplage (5) sont conçues de telle manière qu'après avoir été mise en prise la partie mâle (3) ne peut être enlevée de la portion de couplage (5).

6. Etiquette d'oreille selon l'une quelconque des revendications précédentes,
**caractérisée par**
un système d'assemblage à clic avec une partie mâle (13) et une partie femelle (12) dont l'une est située à l'intérieur de la portion creuse (8) du corps d'oreille (1, 1') et l'autre est située sur la capsule (2), le système d'assemblage à clic étant conçu de telle manière que, lorsque la capsule (2) est entièrement insérée dans la portion creuse (8), la partie mâle (12) et la partie femelle (13) sont en prise l'une avec l'autre de manière à maintenir la capsule (2) en place.

7. Etiquette d'oreille selon l'une quelconque des revendications précédentes,
**caractérisée en ce que**
la capsule (2) a une cavité (7) qui est conçue pour loger
• un moyen de transpondeur (6), en particulier une bobine et/ou une puce RFID et/ou
• un moyen de transporteur moulé (15) comprenant un moyen de transpondeur (6) qui est moulé avec un matériau de résine (14), particulièrement à base d'époxy, d'uréthane ou de silicone.

8. Etiquette d'oreille selon l'une quelconque des revendications précédentes,
**caractérisée en ce que**
la capsule (2) maintient le moyen de transpondeur (6), particulier le moyen de transporteur moulé (15).

9. Etiquette d'oreille selon l'une quelconque des revendications précédentes,
**caractérisée en ce que**
le corps d'étiquette (1, 1') et/ou la capsule (2) sont en plastique, en particulier à base de polyuréthane ou de nylon et/ou sont des entités moulées en une pièce.

10. Etiquette d'oreille selon l'une quelconque des revendications précédentes,
**caractérisée en ce que**
la portion de liaison (10) est conçue pour être pliée à la région flexible (9), la région flexible (9) en particulier étant une section nervurée.

11. Procédé pour obturer de manière sécurisée une capsule (2) qui est conçue pour maintenir un moyen de transpondeur (6) dans le corps d'étiquette (1, 1') d'une étiquette d'oreille selon l'une quelconque des revendications 1 à 10,
**caractérisé par**
• le fait d'enficher (S3) la capsule (2) dans une portion creuse (8) du corps d'étiquette (1, 1'),
• l'engrènement (S4) d'une partie mâle (3) du corps d'étiquette (1, 1') avec une partie femelle (4) du corps d'étiquette (1, 1') et avec une portion de couplage (5) de la capsule (2).

12. Procédé selon la revendication 11,
**caractérisé en ce**
**qu'**avant d'enficher (S3) la capsule (2) dans la portion creuse (8) l'une des séquences d'étapes suivantes est exécutée :
• moulage (S1) du moyen de transpondeur (6) avec un matériau de résine (14) et insertion (S2) du moyen de transpondeur moulé (15) dans une cavité (7) de la capsule (2) ou
• insertion (S1') du moyen de transpondeur (6) dans une cavité (7) de la capsule (2) et remplissage (S2') de la cavité (7) avec un matériau de résine (14).
